# EUROPÄISCHE PATENTSCHRIFT

(11) **EP 0 379 660 B1**
(45) Veröffentlichungstag und Bekanntmachung des Hinweises auf die Patenterteilung: **08.09.1993**
(21) Anmeldenummer: 89121091.6
(22) Anmeldetag: 14.11.1989
(51) Int. Cl.: A01B 39/14, A01B 39/24

(54) **Bodenbearbeitungsgerät für Reihenkulturen**
Soil working implement for row crops
Machine pour le travail du sol pour cultures en lignes

(30) Priorität: 24.01.1989 DE 3901993
(43) Veröffentlichungstag der Anmeldung: 01.08.1990
(73) Patentinhaber: Karl Becker GMBH & CO K.G. Maschinenfabrik, D-34397 Oberweser (DE)
(72) Erfinder: von Allwörden, Wilhelm, D-7704 Gailingen (DE)
(74) Vertreter: Tiedtke, Harro, Dipl.-Ing.

(56) Entgegenhaltungen:
- DE-A- 3 616 403
- US-A- 3 921 726
- US-A- 3 955 626
- US-A- 4 206 815

## Beschreibung

Die Erfindung bezieht sich auf ein Bodenbearbeitungsgerät gemäß dem Oberbegriff des Patentanspruchs 1.

Ein derartiges Bodenbearbeitungsgerät (DE-A-3 616 403) weist eine Tragvorrichtung auf, an der eine Vielzahl von nebeneinander angeordneten Bodenbearbeitungsaggregaten angebracht ist, die jeweils den Zwischenraum zwischen zwei benachbarten Pflanzenreihen bearbeiten. Die Tragvorrichtung umfaßt dabei einen Hauptträger und mindestens einen Nebenträger, der seitlich an den Hauptträger angekoppelt werden kann. Jedes Bodenbearbeitungsaggregat ist so ausgebildet, daß es einen Längsträger aufweist, an dem die eigentlichen Bodenbearbeitungswerkzeuge, beispielsweise Hacken, angebracht sind. Üblicherweise sind darüber hinaus Schutzteller vorgesehen, die eine Beschädigung der Pflanzenreihen mittels der Bodenbearbeitungswerkzeuge verhindern. Jedes Bodenbearbeitungsaggregat ist so an der Tragvorrichtung montiert, daß es in einem Zwischenraum zwischen zwei benachbarten Pflanzenreihen plaziert ist. Durch das Zusammenwirken zweier Bodenbearbeitungsaggregate kann somit eine Pflanzenreihe beidseitig bearbeitet werden.

Die Arbeitsbreite des Bodenbearbeitungsgeräts, d. h. die Anzahl der Bodenbearbeitungsaggregate und somit die Anzahl der in einem Arbeitsgang zu bearbeitenden Pflanzenreihen ist abhängig von den Rahmenbedingungen, bei denen das Bodenbearbeitungsgerät betrieben werden soll.

Reihenkulturen werden üblicherweise 6- oder 4-reihig ausgesät, wobei ein bestimmtes Reihenabstandsmaß eingehalten wird. Beim Bestellen des Feldes muß das Feld mit dem mehrreihig arbeitenden Bodenbearbeitungsgerät mehrfach überfahren werden mit der Folge, daß jeder 4. bzw. 6. Reihenabstand mehr oder weniger von dem vorbestimmten Reihenabstandsmaß abweicht. Zur wirtschaftlichen Bearbeitung ist es deshalb erforderlich, eine n-reihig ausgesäte Reihenkultur mit einem n-reihig arbeitenden Bodenbearbeitungsgerät nachzuarbeiten. Ansonsten liefe man Gefahr, Pflanzenreihen zu beschädigen. Um dies zu verhindern, mußte bislang ein aufwendiger Umbau des Bodenbearbeitungsgerätes vorgenommen werden.

Der Erfindung liegt die Aufgabe zugrunde, ein Bodenbearbeitungsgerät zu schaffen, dessen Arbeitsbreite unter Beibehaltung einer hohen Arbeitseffektivität in einfacher Weise veränderbar ist.

Diese Aufgabe wird erfindungsgemäß durch das Bodenbearbeitungsgerät gemäß Patentanspruch 1 gelöst.

Durch die erfindungsgemäße Aufteilung des im Kopplungsbereich zwischen dem Hauptträger und dem Nebenträger angeordneten Bodenbearbeitungsaggregats in zwei jeweils einseitig arbeitende Bodenbearbeitungseinheiten ist ein Umbau der Bodenbearbeitungseinheiten bei einem Wechsel der Arbeitsbreite nicht mehr notwendig. Wenn der Benutzer des Bodenbearbeitungsgeräts eine große Arbeitsweite wünscht, wird der Nebenträger in eine Arbeitsstellung gebracht, in der die an ihm angebrachten Bodenbearbeitungsaggregate und Bodenbearbeitungseinheiten mit dem zu bearbeitenden Boden in Eingriff treten können. Dabei ergänzen sich die beiden im Kopplungsbereich zwischen Hauptträger und Nebenträger angeordneten Bodenbearbeitungseinheiten zu einem Bodenbearbeitungsaggregat, so daß wie bei den bekannten Bodenbearbeitungsgeräten bei großer Arbeitsbreite eine hohe Arbeitseffektivität erzielt werden kann. Wenn aber der Benutzer des Bodenbearbeitungsgeräts eine geringe Arbeitsbreite wünscht, die lediglich durch den Hauptträger bestimmt sein soll, wird der Nebenträger in eine Ruhestellung gebracht. Zu diesem Zweck kann er beispielsweise gemäß Unteranspruch 2 verschwenkt oder von dem Hauptträger demontiert werden. Auch wenn der Nebenträger sich in seiner Ruhestellung befindet, verbleibt am äußeren Ende des Hauptträgers eine einseitig arbeitende Bodenbearbeitungseinheit, so daß auch bei einer geringen Arbeitsbreite die äußeren Pflanzenreihen beidseitig bearbeitet werden können, ohne daß größere Umbauten oder Modifizierungen des Bodenbearbeitungsgeräts notwendig sind. Darüber hinaus ergibt sich der Vorteil, daß die Handhabbarkeit des Bodenbearbeitungsgerätes trotz einer großen maximalen Arbeitsbreite verbessert ist.

Um das Bodenbearbeitungsgerät an beispielsweise unterschiedliche Reihenabstände anpassen zu können, ist es vorteilhaft, die gegenseitigen Positionen der Bodenbearbeitungsaggregate und Bodenbearbeitungseinrichtungen an der Tragvorrichtung, insbesondere deren gegenseitigen Seitenabstand, einstellen zu können.

Vorteilhafte Weiterbildungen der Erfindung sind Gegenstand der Unteransprüche.

Weitere Ziele, Anwendungen und Vorteile der Erfindung werden aus der folgenden ausführlichen Beschreibung von bevorzugten Ausführungsbeispielen unter Bezugnahme auf die beigefügten Zeichnungen vollständig ersichtlich. Es zeigen:
- Fig. 1: ein Bodenbearbeitungsgerät gemäß einem ersten Ausführungsbeispiel der Erfindung und
- Fig. 2: ein Bodenbearbeitungsgerät gemäß einem zweiten Ausführungsbeispiel der Erfindung, wobei die Nebenträger nicht dargestellt sind.

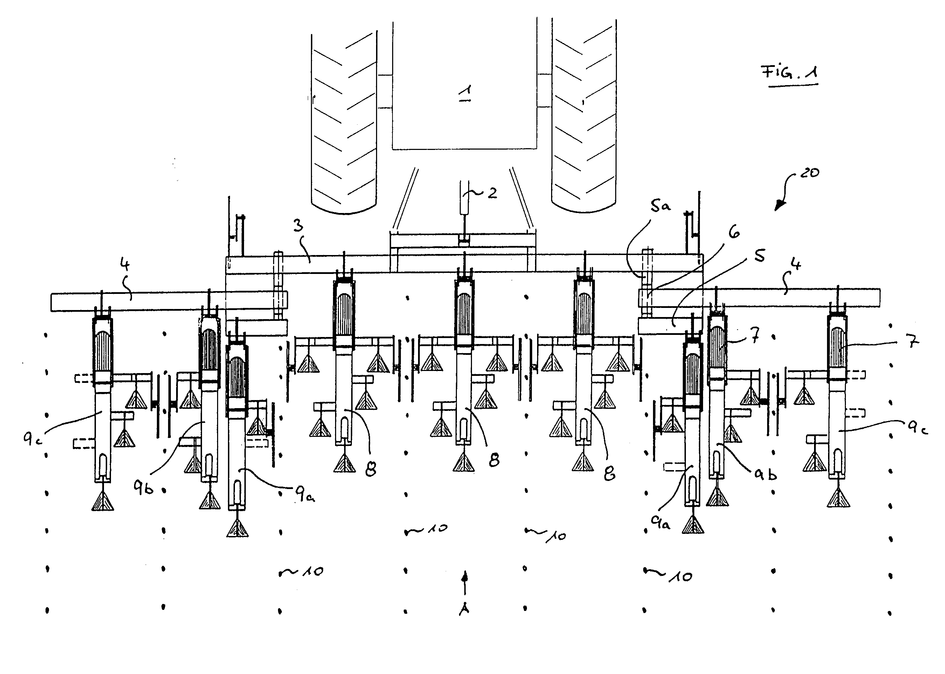

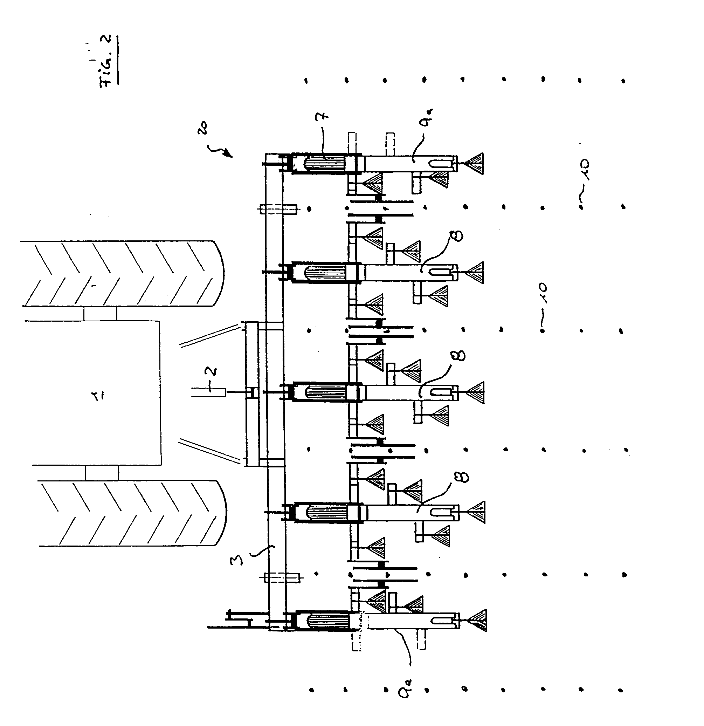

Die Fig. 1 und 2 zeigen eine Hackeinrichtung 20, die in der folgenden Beschreibung als Beispiel für ein Bodenbearbeitungsgerät herangezogen werden soll.

Gemäß Fig. 1 ist die Hackeinrichtung 20 über eine Befestigungsvorrichtung 2 an einem Zugfahrzeug 1 angekoppelt das die Hackeinrichtung 20 in eine Arbeitsrichtung A über einen zu bearbeitenden Boden zieht. Die Hackeinrichtung 20 weist eine im wesentlichen quer zur Arbeitsrichtung A angeordnete Tragvorrichtung auf, die einen Hauptträger 3 sowie zwei Nebenträger 4 umfaßt, die an den äußeren Enden des Hauptträgers 3 derart an diesem angekoppelt sind, daß sie von diesem im wesentlichen quer zur Arbeitsrichtung A seitlich hervorragen. An den Hauptträger 3 und den Nebenträgern 4 sind eine Vielzahl von nebeneinander angeordneten Hackaggregaten 8 angebracht, mittels derer jeweils ein zwischenraum zwischen zwei benachbarten Pflanzenreihen 10 bearbeitet bzw. gehackt werden kann. Der Aufbau eines Hackaggregats 8 ist an sich bekannt, so daß an dieser Stelle nicht nochmals darauf eingegangen werden soll.

Die Nebenträger 4 sind über ein Gelenk 6 schwenkbar am Hauptträger 4 angebracht, so daß sie wahlweise in eine in Fig. 1 dargestellte Arbeitsstellung, in der die am Nebenträger 4 angebrachten Hackaggregate mit dem zu bearbeitenden Boden in Eingriff treten können, und in eine Ruhestellung bringbar sind, in der die Nebenträger in einer im wesentlichen vertikalen Stellung angeordnet sind, in der sie senkrecht zur Zeichenebene der Fig. 1 verlaufen.

An den äußeren Enden der Nebenträger 4 ist jeweils eine einseitig arbeitende Hackvorrichtung 9c angeordnet, die nach innen, d. h. in Richtung der Längsmittelachse der Hackeinrichtung 20, die in Arbeitsrichtung A verläuft arbeitet und die jeweils äußeren, zu bearbeitenden Pflanzenreihen von der Außenseite bearbeitet.

Die in den Kopplungsbereichen zwischen dem Hauptträger und den Nebenträgern 4 angeordneten Hackaggregate 8 sind in zwei jeweils einseitig arbeitende Hackeinheiten 9a und 9b unterteilt, wobei eine erste, nach innen arbeitende Hackeinheit 9a an dem Hauptträger 3 und eine zweite, nach außen arbeitende Hackeinheit 9b an dem Nebenträger 4 angebracht ist. Die erste Hackeinheit ist dabei entgegen der Arbeitsrichtung A nach hinten versetzt angeordnet und über ein Trägerelement 5, das im wesentlichen parallel zum Hauptträger 3 verläuft, und ein Verbindungselement 5a mittelbar am Hauptträger 3 gelagert. Auf diese Weise ist ein ausreichender Bauraum für die Kopplung zwischen dem Hauptträger 3 und dem Nebenträger 4 geschaffen, so daß für die Kopplung eine konstruktiv einfache Ausbildung Verwendung finden kann. Gemäß Fig. 1 dient das Verbindungselement 5a gleichzeitig als Schwenkachse für den Nebenträger 4, so daß der konstruktive Aufbau weiter vereinfacht ist.

Jedes Hackaggregat 8 weist ein Bodenrad 7 auf, mittels dessen es angetrieben wird, wobei den selbständigen Hackeinheiten 9a, 9b und 9c jeweils ein separates Bodenrad 7 zugeordnet ist.

Im folgenden sollen die Betriebsweisen der Hackeinrichtung 20 erläutert werden.

Wenn ein Benutzer der Hackeinrichtung 20 eine große Arbeitsbreite wünscht, werden die Nebenträger 4 in die in Fig. 1 gezeigte Arbeitsstellung geschwenkt, in der die am Nebenträger 4 angeordneten Hackeinheiten 9b und 9c mit dem zu bearbeitenden Boden in Eingriff treten können. Da an den äußeren Enden der Nebenträger die jeweils einseitig arbeitenden Hackeinheiten 9c angeordnet sind, ist es mit der Hackeinrichtung 20 gemäß Fig. 1 möglich, sechs Pflanzenreihen 10 in einem Arbeitsgang beidseitig zu bearbeiten.

Wenn der Benutzer der Hackeinrichtung 20 eine geringe Arbeitsbreite wünscht, werden die Nebenträger 4 um das Gelenk 6 in ihre Ruhestellung geschwenkt, in der sie im wesentlichen vertikal zur Zeichenebene gemäß Fig. 1 verlaufen. Somit können die am Nebenträger 4 angebrachten Hackeinheiten 9b und 9c mit dem zu bearbeitenden Boden nicht in Eingriff treten und die Arbeitsbreite ist durch die am Hauptträger 3 angebrachten Hackaggregate 8 sowie Hackeinheiten 9a bestimmt. Da auf diese Weise auch bei einer geringen Arbeitsbreite an den äußeren Enden eine einseitig nach innen arbeitende Hackeinheit 9a angeordnet ist, kann mit der Hackeinrichtung 20 gemäß Fig. 1, wenn diese auf ihre kurze Arbeitsbreite eingestellt ist, vier Pflanzenreihen in einem Arbeitsgang beidseitig bearbeitet werden.

Um gegebenenfalls eine noch geringere Anzahl von Pflanzenreihen in einem Arbeitsgang zu bearbeiten, ist es möglich, die Hackaggregate und/oder die Hackeinheiten von der Tragvorrichtung zu lösen.

Durch die Aufteilung des im Kopplungsbereich zwischen dem Haupttträger 3 und den Nebenträgern 4 angeordneten Hackaggregats in zwei unabhängig voneinander arbeitende Hackeinheiten 9a und 9b ist somit sowohl bei einer großen Arbeitsbreite als auch bei einer verkürzten Arbeitsbreite eine hohe Arbeitseffektivität gewährleistet, ohne daß größere Umbauten an der Hackeinrichtung 20 vorgenommen werden müssen.

Bei der Hackeinrichtung 20 gemäß Fig. 1 waren die Nebenträger schwenkbar am Hauptträger angebracht und die ersten Hackeinheiten 9a waren mittelbar am Hauptträger gelagert. Es ist selbstverständlich auch möglich, die ersten Hackeinheiten 9a unmittelbar am Hauptträger zu lagern, wie es in Fig. 2 dargestellt ist. Bei dem Ausführungsbeispiel sind die Nebenträger vom Hauptträger 3 demontiert, so daß bei einer gewünschten geringen Arbeitsbreite das Gesamtgewicht der Hackeinrichtung 20 verringert und somit deren Handhabbarkeit wesentlich verbessert ist.

Vorstehend sind nur einige Ausführungsbeispiele der Erfindung erläutert wurden.

## Patentansprüche

1. Bodenbearbeitungsgerät für Reihenkulturen, mit einer Tragvorrichtung, an der eine Vielzahl von nebeneinander angeordneten Bodenbearbeitungsaggregaten (8) angeordnet ist, die jeweils einen Zwischenraum zwischen zwei benachbarten Pflanzenreihen bearbeiten, wobei die Tragvorrichtung einen Hauptträger mit mehreren beidseitig arbeitenden Bodenbearbeitungsaggregaten und mindestens einen Nebenträger aufweist, der seitlich an den Hauptträger angekoppelt ist,
dadurch gekennzeichnet, daß ein im Kopplungsbereich zwischen dem Hauptträger (3) und dem Nebenträger (4) angeordnetes Bodenbearbeitungsaggregat (8) zwei jeweils einseitig arbeitende Bodenbearbeitungseinheiten (9a, 9b) aufweist, von denen eine erste Bodenbearbeitungseinheit (9a) am Hauptträger (3) und eine zweite Bodenbearbeitungseinheit (9b) am Nebenträger (4) angebracht ist.

2. Bodenbearbeitungsgerät nach Anspruch 1, dadurch gekennzeichnet, daß der zumindest eine Nebenträger (4) schwenk- und/oder demontierbar am Hauptträger (3) angebracht ist.

3. Bodenbearbeitungsgerät nach Anspruch 1 oder 2, dadurch gekennzeichnet, daß die Bodenbearbeitungseinheiten (9a, 9b) demontierbar an der Tragvorrichtung angebracht sind.

4. Bodenbearbeitungsgerät nach einem der Ansprüche 1 bis 3, dadurch gekennzeichnet, daß die erste Bodenbearbeitungseinheit (9a) über ein Trägerelement (5) und ein Verbindungselement (5a) an dem Hauptträger (3) mittelbar gelagert ist.

5. Bodenbearbeitungsgerät nach Anspruch 4, dadurch gekennzeichnet, daß das Trägerelement (5) im wesentlichen parallel zum Hauptträger (3) verläuft.

6. Bodenbearbeitungsgerät nach Anspruch 4 oder 5, dadurch gekennzeichnet, daß das Verbindungselement (5a) die Schwenkachse des Nebenträgers (4) ausbildet.

7. Bodenbearbeitungsgerät nach einem der Ansprüche 1 bis 6, wobei jedes Bodenbearbeitungsaggregat ein Bodenrad aufweist, dadurch gekennzeichnet, daß jede Bodenbearbeitungseinheit (9a, 9b) ein separates Bodenrad (7) aufweist.

8. Bodenbearbeitungsgerät nach einem der Ansprüche 1 bis 7, dadurch gekennzeichnet, daß der Hauptträger (3) quer zur Arbeitsrichtung (A) des Bodenbearbeitungsgerätes (20) angeordnet ist.

9. Bodenbearbeitungsgerät nach einem der Ansprüche 1 bis 8, dadurch gekennzeichnet, daß der Nebenträger (4) als äußeres Bodenbearbeitungsaggregat eine einseitig nach innen arbeitende Bodenbearbeitungseinheit (9c) aufweist.

10. Bodenbearbeitungsgerät nach einem der Ansprüche 1 bis 9, dadurch gekennzeichnet, daß der Seitenabstand der Bodenbearbeitungsaggregate (8) und der Bodenbearbeitungseinheiten (9a, 9b, 9c) einstellbar ist.

## Claims

1. A soil working implement for row crops, comprising a supporting means, on which a plurality of adjacently arranged soil cultivation aggregates (8) are disposed, each of which works on an intermediate space between two adjacent rows of plants, wherein said supporting means includes a main support having several soil cultivation aggregates working on both sides and at least one secondary support laterally coupled to said main support,
**characterized in that**
a soil cultivation aggregate (8) disposed in the coupling range between said main support (3) and said secondary support (4) includes two soil cultivation units (9a, 9b) respectively working on one side, a first soil cultivation unit (9a) of which is mounted on said main support (3) and a second soil cultivation unit (9b) of which is mounted to said secondary support (4).

2. A soil working implement according to claim 1,
**characterized in that**
said at least one secondary support (4) is mounted to said main support (3) so as to be swivelling and/or detachable.

3. A soil working implement according to claim 1 or 2,
**characterized in that**
said soil cultivation units (9a, 9b) are detachably mounted to said supporting means.

4. A soil working implement according to any of claims 1 to 3,
**characterized in that**
said first soil cultivation unit (9a) is indirectly supported on said main support (3) via a supporting member (5) and a connecting member (5a).

5. A soil working implement according to claim 4,
**characterized in that**
said supporting member (5) runs substantially in parallel to said main support (3).

6. A soil working implement according to claim 4 or 5,
**characterized in that**
said connecting member (5a) forms the swivelling axis of said secondary support (4).

7. A soil working implement according to any of claims 1 to 6, wherein each soil cultivation aggregate has a driving wheel,
**characterized in that**
each soil cultivation unit (9a, 9b) has a separate driving wheel (7).

8. A soil working implement according to any of claims 1 to 7,
**characterized in that**
said main support (3) is disposed perpendicular to the working direction (A) of said soil working implement (20).

9. A soil working implement according to any of claims 1 to 8,
**characterized in that**
said secondary support (4) has a soil cultivation unit (9c) working one-sidedly to the interior as outer soil cultivation aggregate.

10. A soil working implement according to any of claims 1 to 9,
**characterized in that**
the lateral distance of said soil cultivation aggregates (8) and said soil cultivation units (9a, 9b, 9c) is adjustable.

## Revendications

1. Machine pour le travail du sol pour cultures en lignes, comportant un dispositif de support sur lequel sont montés plusieurs ensembles de travail du sol (8) disposés côte à côte, qui travaillent chacun un espace intermédiaire compris entre deux rangées de plantes voisines, le dispositif de support comportant un support principal avec plusieurs ensembles de travail du sol fonctionnant des deux côtés ainsi qu'au moins un support auxiliaire qui est accouplé sur le côté du support principal, caractérisée en ce qu'un ensemble de travail du sol (8) placé dans la zone d'accouplement entre le support principal (3) et le support auxiliaire (4) comporte deux unités de travail du sol (9a, 9b) fonctionnant chacune d'un côté, dont une première unité (9a) est fixée sur le support principal (3) et une seconde unité (9b) sur le support auxiliaire (4).

2. Machine pour le travail du sol selon la revendication 1, caractérisée en ce que le support auxiliaire (4) au moins est monté pivotant et/ou démontable sur le support principal (3).

3. Machine pour le travail du sol selon les revendications 1 ou 2, caractérisée en ce que les unités (9a, 9b) sont fixées sur le dispositif de support de manière à pouvoir être démontées.

4. Machine pour le travail du sol selon l'une des revendications 1 à 3, caractérisée en ce que la première unité (9a) est montée sur le support principal (3), par l'intermédiaire d'un élément de support (5) et d'un élément de liaison (5a).

5. Machine pour le travail du sol selon la revendication 4, caractérisée en ce que l'élément de support (5) est pratiquement parallèle au support principal (3).

6. Machine pour le travail du sol selon les revendications 4 ou 5, caractérisée en ce que l'élément de liaison (5a) forme l'axe de pivotement du support auxiliaire (4).

7. Machine pour le travail du sol selon l'une des revendications 1 à 6 dans laquelle chaque ensemble comporte une roue de sol, caractérisée en ce que chaque unité (9a, 9b) comporte une roue de sol (7) séparée.

8. Machine pour le travail du sol selon l'une des revendications 1 à 7, caractérisée en ce que le support principal (3) est transversal à la direction de travail (A) de la machine pour le travail du sol (20).

9. Machine pour le travail du sol selon l'une des revendications 1 à 8, caractérisée en ce que le support auxiliaire (4) comporte, en tant qu'ensemble extérieur de travail du sol, une unité (9c) fonctionnant d'un côté vers l'intérieur.

10. Machine pour le travail du sol selon l'une des revendications 1 à 9, caractérisée en ce que l'écartement latéral des ensembles (8) et des unités (9a, 9b, 9c) est réglable.
